(19) Europäisches Patentamt
European Patent Office
Office européen des brevets

(11) **EP 0 676 844 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int Cl.$^6$: **H02H 3/33**

(21) Anmeldenummer: **95104795.0**

(22) Anmeldetag: **31.03.1995**

(54) **Sich selbsttätig überwachender Fehlerstromschutzschalter**

Self-monitoring ground fault circuit interrupter

Coupe-circuit auto-surveillant en cas de défaut à la masse

(84) Benannte Vertragsstaaten:
**AT BE DE DK ES FR GB IT NL SE**

(30) Priorität: **09.04.1994 DE 4412305**

(43) Veröffentlichungstag der Anmeldung:
**11.10.1995 Patentblatt 1995/41**

(73) Patentinhaber: **AEG Niederspannungstechnik GmbH & Co. KG**
**24531 Neumünster (DE)**

(72) Erfinder: **Berthold, Rainer**
**69251 Gaiberg (DE)**

(74) Vertreter:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(56) Entgegenhaltungen:
**EP-A- 0 337 235**    **EP-A- 0 502 393**
**EP-A- 0 506 602**    **GB-A- 2 056 094**
**GB-A- 2 269 064**

**Beschreibung**

Die Erfindung betrifft einen Fehlerstromschutzschalter nach dem Oberbegriff des Anspruchs 1.

Fehlerstromschutzschalter sind Geräte der Hausinstallationstechnik und sollen Menschen vor gefährlichen Stromschlägen und Gebäude vor durch elektrische Installationen hervorgerufene Brände schützen.

Aus der EP 0 502 393 A2 ist ein Fehlerstromschutzschalter bekannt, der eine Prüfeinrichtung nach einer vorbestimmten Betriebsdauer automatisch kurzzeitig schließt, so daß das Auslöserelais des Fehlerstromschutzschalters zum Ansprechen gebracht wird.

Aus der EP 0 506 602 A2 ist ein Fehlerstromschutzschalter bekannt, bei dem auf die Betätigung einer Prüftaste hin ein automatischer Prüfvorgang ausgeführt wird. Bei diesem Prüfvorgang wird der Auslösestrom und die Auslösezeit ermittelt und die ermittelte Auslösezeit mit einer vorbestimmten Auslösezeit verglichen, wobei gleichzeitig das Überschreiten der vorbestimmten Auslösezeit angezeigt werden kann.

Die GB 2 056 094 zeigt einen Fehlerstromschutzschalter, bei dem ebenfalls auf die Betätigung einer Prüftaste hin ein automatischer Prüfvorgang durchgeführt wird. Während dieses Prüfvorgangs werden dem Auslöserelais des dort gezeigten Fehlerstromschutzschalters Prüfstromimpulse von vorbestimmter Länge und steigender Amplitude zugeführt. Bei Auslösung des Auslöserelais wird festgestellt, nach welcher Zeit und bei welcher Amplitude der Fehlerstromschutzschalter ausgelöst hat und gegebenenfalls eine Anzeigeeinrichtung aktiviert, wenn vorbestimmte Grenzwerte überschritten sind.

Es ist bekannt, daß diese Geräte im Laufe der Zeit ausfallen können. Deshalb sind sie mit einer von Hand zu betätigenden Prüftaste ausgerüstet.

Auch wurde bereits ein Fehlerstromschutzschalter mit automatischer Prüfung bekannt (deutsche Patentschrift Nr. 4106652).

Die meisten bekannten Fehlerstromschutzschalter arbeiten heute netzspannungsunabhängig (siehe G.Biegelmeier; Schutzmaßnahmen in Niederspannungsanlagen; Österreichischer Gewerbeverlag, Wien 1978), doch gibt es auch sogenannte DI-Schalter, die netzabhängige Fehlerstromschutzschalter sind.

DI-Schalter besitzen, wie die netzspannungsunabhängigen, einen Summenstromwandler mit Sekundärwicklung, die an eine netzabhängige Auswerte-Elektronik anschließt. Der Vorteil dieser Schalter liegt darin, daß sie keine hochempfindlichen Auslöser wie die Magnetauslöser benötigen.

Die Elektronik kann jedes beliebig unempfindliche Relais speisen, das im Fehlerstromfall das Schaltwerk auslöst. Das Schaltwerk kann sogar ein von dieser Elektronik gesteuerter Schütz sein.

In der EP 0220408 ist ein selbstüberwachender Fehlerstromschutzschalter beschrieben, bei dem die regelmäßige Funktionsprüfung entfallen kann, indem sich der Fehlerstromschutzschalter während der gesamten Betriebsdauer ständig selbst überwacht. Zusätzlich schaltet der Fehlerstromschutzschalter auch bei Unterbrechung der Stromzuführung ab und bei Wiederkehr der Stromzuführung nicht selbsttätig wieder ein.

Dabei bezieht sich die Überwachung hauptsächlich auf die elektronische Schaltung. Der Schalter schaltet ab, wenn der Fehlernennstrom überschritten wird. Er ist nicht in der Lage, einen sich anbahnenden Defekt zu erkennen.

Die meisten der heute in Gebäuden eingesetzten Fehlerstromschutzschalter bestehen aus einem Gehäuse, in dem ein Summenstromwandler, ein Magnetauslöser, ein Schaltwerk und eine Prüfvorrichtung (Prüftaste) untergebracht sind.

Die nachgewiesenermaßen anfälligsten Elemente sind der Magnetauslöser und die Prüfeinrichtung.

Ein wesentliches Merkmal des Magnetauslösers eines Fehlerstromschutzschalters ist der sehr geringe Luftspalt zwischen den Polflächen seines Ankers und Joches.

Wenn nach monate- oder jahrelangem Nichtöffnen dieser Magnetkontakte die feingeschliffenen Polflächen langsam kaltverschweißen, wie aus der Relaistechnik bekannt ist (s.Siemens-Norm SN 29500/Teil 7), steigt auch der Ansprechwert des Fehlerstromschutzschalters langsam an, bis die Verschweißung (ein Diffusionsschweißprozeß) so fest ist, daß ein völliges Haften des Ankers am Joch auftritt, so daß die Federkraft selbst bei völlig fehlendem Permanentmagnetfluß nicht ausreicht, den Anker zu lösen, das Schaltwerk des Schalter zu entklinken und damit den Stromkreis zu unterbrechen.

Sowohl die handbetätigbare als auch die automatische Prüftaste gemäß DP4106652, die z. B. monatlich die Funktionsweise des Fehlerstromschutzschalters überprüfen, haben den Nachteil, daß nur ein nicht mehr auslösender Schalter, also ein die Schutzfunktion nicht mehr ausführender Schalter, erkannt wird. Dies hat zur Folge, daß der Schutz über Tage, ja Wochen nicht existiert und der Schalter in dieser Zeit im Notfall versagt.

Der Erfindung liegt die Aufgabe zugrunde einen Fehlerstromschutzschalter zu schaffen, bei dem nicht erst der defekte Schalter erkannt, sondern daß auch schon der sich anbahnende Defekt noch vor dem Versagen des Schalters detektiert und rechtzeitig Alarm gegeben wird, um den Schalter noch vor seinem Ausfall auswechseln zu können. Das heißt, er ist bis zum Austausch noch voll funktionsfähig.

Diese Aufgabe wird bei einer gattungsgemäßen Einrichtung durch die kennzeichnenden Merkmale des Anspruchs 1 gelöst.

Ein Fehlerstromschutzschalter besitzt zur Detektierung eines Fehlerstromes in einer Netzleitung einen Summenstromwandler, dessen Primärwicklung durch die Netzleiter gebildet ist. Der Summenstromwandler besitzt weiterhin eine Sekundärwicklung, an der bei Auftreten eines Fehlerstromes im Netz ein Signal entsteht, welches den Fehlerstromschutzschalter zum Ausschalten bringt.

Erfindungsgemäß erzeugt man vorzugsweise automatisch in vorbestimmten Zeiten einen ansteigenden Fehlerstrom i und leitet ihn im Inneren des Schalters über das Auslöseelement, z. B. einen Magnetauslöser. Dieses bzw. dieser muß bei Erreichen des Sollansprechwertes, der ständig mit dem ansteigenden Strom in einem Komparator verglichen wird, auslösen. Löst das o. g. Element bei Erreichen des Sollwertes nicht aus, gibt eine Einrichtung, z. B. eine elektronische Überwachungseinheit, ein Signal ab, das einen Alarmgeber in Funktion setzt.

Bei Auslösen mißt ein Sensor den Auslösestrom i und speichert ihn in einem elektronischen Speicher z. B. einem EE PROM. Dies wiederholt sich immer dann, wenn der Ansprechwert $i_a$ gemessen wird.

Aus diesen gespeicherten Stromwerten bildet ein Differenzierglied automatisch den zeitlichen Anstieg $\frac{\Delta i_a}{\Delta t}$ der Ansprechwerte.

Aus diesem so ermittelten Anstieg kann man auf den Zeitpunkt des Überschreitens des maximalen Sollansprechwertes schließen, d. h. extrapolieren und ihn in geeigneter Weise zur Anzeige bringen. Dadurch hat man genügend Zeit, den Fehlerstromschutzschalter rechtzeitig austauschen zu lassen.

Da der Anprechwert von Schalter zu Schalter unterschiedlich sein kann, beispielsweise liegt er bei neuen "30mA - Schaltern" zwischen 15 und 26mA, erzeugt man z. B. mit Hilfe eines sog. Rampengenerators einen ansteigenden Fehlerstrom, bis dieser den Ansprechwert erreicht.

Die vorbestimmten Zeiten, nach denen ein Meßvorgang eingeleitet wird, richten sich nach der Größe des Ansprechwertes.

Nähert sich der Ansprechwert dem Sollwert, verkürzen sich automatisch die Zeitabstände, nach denen die jeweils nächsten Messungen erfolgen.

Will man nicht nur die Ansprechwerte überwachen, sondern die Funktionsfähigkeit des gesamten Schalters, dann wird bei Erreichen eines bestimmten Ansprechwert-Anstieges $\frac{\Delta i_a}{\Delta t}$ Alarm gegeben. Tauscht man daraufhin den Schalter nicht aus, schaltet sich der Schalter nach einer ebenfalls vorbestimmten Zeit, z. B. nach 6 - 8 Wochen, selbsttätig aus.

Handelt es sich um einen 300mA - Fehlerstromschutzschalter, der für den Brandschutz eingesetzt wird, so wären 6 - 8 Wochen viel zu lang, d. h. er muß sofort abschalten, wenn ein gefährlicher Anstiegswert erreicht wird.

Eine weitere Möglichkeit, den gesamten Schalter zu überwachen, besteht darin, jeweils nach Erreichen des Ansprechwertes nicht nur Alarm zu geben, sondern die Hauptstromkontakte zu öffnen und innerhalb 200ms wieder zu schließen.

Damit während des Offenstehens der Hauptstromkontakte der Strom weiterfließt, schließen sich über diese automatisch bypassartig Hilfsstromkontakte, die sich nach dem Gesamtüberprüfungsvorgang (Meßvorgang), d. h. nach dem Wiederschließen der Hauptstromkontakte wieder öffnen.

Will man jedoch die Hauptstromkontakte nicht überprüfen, da in den letzten Jahren die Schaltwerke der Fehlerstromschutzschalter nicht mehr ausfielen, weil keine harzenden Schmierstoffe mehr verwendet wurden, spricht bei Erreichen des Ansprechwertes nur der Auslösemechanismus, z. B. das Auslöserelais, der Magnetauslöser oder ein anders gearteter Aktor, beispielsweise ein Piezo-Aktor an, wobei eine Sperre, d. h. ein Sperrglied das Auslösen des Schaltwerkes vernindert.

Auch damit umgeht man Stromausfall während des Prüfvorganges.

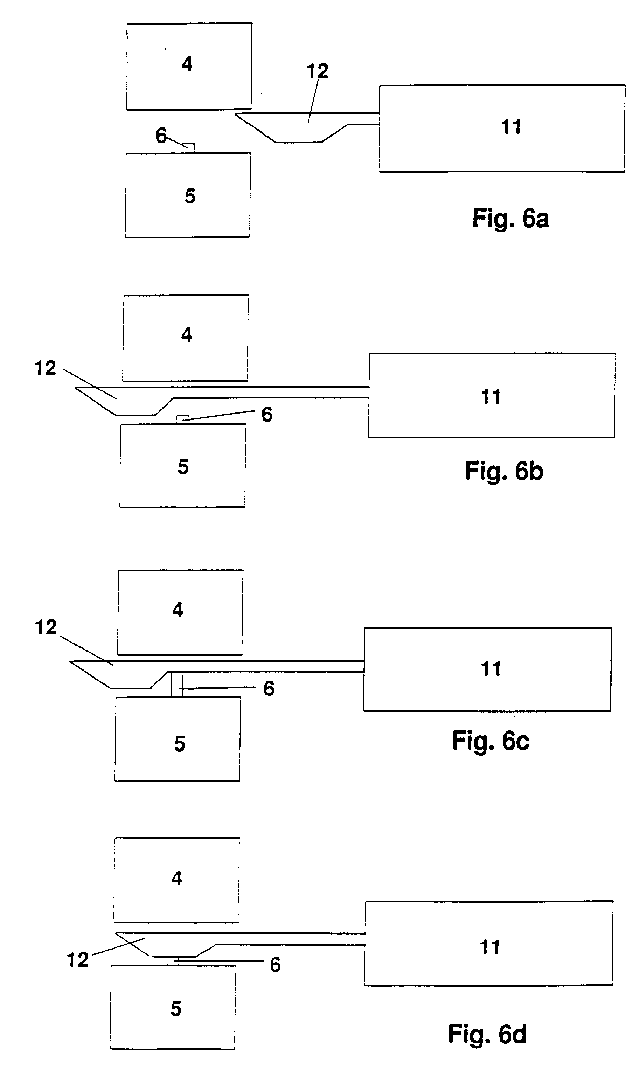

Da beispielsweise die Magnetkontakte eines Magnetauslösers nach Öffnen gleich wieder geschlossen werden müssen, besitzt die Sperre eine in Fig. 6 dargestellte o. ä. Form, so daß sich die Magnetkontakte beim Zurückziehen der Sperre automatisch schließen. Selbstverständlich kann sich die Sperre, die das Entklinken des Schaltwerkes verhindert, auch an geeigneter Stelle im Schaltwerk befinden.

Die Sperre, d. h. die Sperrvorrichtung kann z. B. elektromechanisch, elektromagnetisch, elektrothermisch, mit Hilfe von herkömmlichen Aktoren, einen FGL-Antrieb o. ä. angetrieben werden.

Der Ansprechwert, d. h. der Ansprechstrom kann mit jedem geeigneten Stromsensor gemessen werden. Im einfachsten Fall mit einem Meßwiderstand, der in einer Brückenschaltung integriert ist. Die Brücke schließt sich an einen Komparator an, der ständig den Meß- mit dem Sollwert vergleicht. Das Erreichen des Sollwertes wird detektiert.

Eine weitere Ausgestaltung der Erfindung liegt darin, mit dieser auch den Anstieg der Ansprechwerte von Fehlerstromschutzschaltern nach einem Kurzschluß zu erkennen.

Zu diesem Zwecke detektiert ein weiterer, entsprechend dimensionierter Stromsensor den Kurzschlußstrom, der durch den Schalter fließt und löst über eine geeignete Einrichtung den im Hauptanspruch beschriebenen Meßvorgang aus. Um zu verhindern, daß dieser Vorgang schon bei Überlast eintritt, kann man für die Kurzschlußstromerkennung eine Rokowsky-Spule einsetzen, die nicht den Kurzschlußstrom $i_k$ mißt, sondern dessen Anstieg $\frac{di_k}{dt}$.

Es ist bekannt, daß der Kurschlußstrom den Ansprechwert eines Fehlerstromschutzschalters ansteigen läßt, dieser jedoch nach Drücken der Prüftaste wieder normale Werte annimmt. Deshalb wird die Messung des Fehlerstromansprechwertes gleich nochmals durchgeführt, um unnötigen Alarm zu vermeiden. Nur wenn der Schalter durch den Kurzschlußstrom Schaden genommen haben sollte, wird Alarm gegeben und/oder der Hauptstromkontakt geöffnet.

Alle sich aus der Erfindung ergebende Hardware kann in Form eines herkömmlichen, an den Fehlerstromschutzschalter anflanschbaren Hilfsschalters ausgebildet werden.

Auch ist es sinnvoll, alle Funktionen des erfindungsgemäßen Fehlerstromschutzschalters mittels herkömmlicher Mittel, beispielsweise durch Hilfskontakte, zu überwachen und bei Versagen, d. h. Ausfall einer oder mehrerer Funktionen Alarm zu geben.

Diese Überwachung und die Auswertung der Fehlerstromansprechwerte kann erfindungsgemäß auch in eine gebäudesystemtechnische Anlage integriert werden, die über Busleitungen mit vielen erfindungsgemäßen Fehlerstromschutzschaltern korrespondiert und die viele der genannten Funktionen zentral erfüllt.

Anhand von Zeichnungen soll die Erfindung, sowie deren vorteilhafte Ausgestaltung näher erläutert und beschrieben werden.

Es zeigen

Figur 1    das Prinzipschaltbild eines Fehlerstromschutzschalters mit Prüftaste,

Figur 2    das Prinzipschaltbild eines Fehlerstromschutzschalters mit automatischer Prüftaste und Schaltwerkssperre,

Figur 3    das Prinzipschaltbild des erfindungsgemäßen Fehlerstromschutzschalters mit Schaltwerkssperre, Stromgeber, Stromsensor Komparator, Operationsverstärker und Signalgabeeinrichtung,

Figur 4    das Prinzipschaltbild eines erfindungsgemäßen Fehlerstromschutzschalters ohne Schaltwerkssperre, mit Bypass und Schaltwerksantrieb,

Figur 5    dasselbe wie Fig. 4, jedoch mit zusätzlichem Schaltgerät, das das Stromversorgungsnetz auch bei Versagen des Fehlerstromschutzschalter-Schaltwerkes abschalten kann,

Figur 6    eine von vielen denkbaren Formen der Schaltwerksperre.

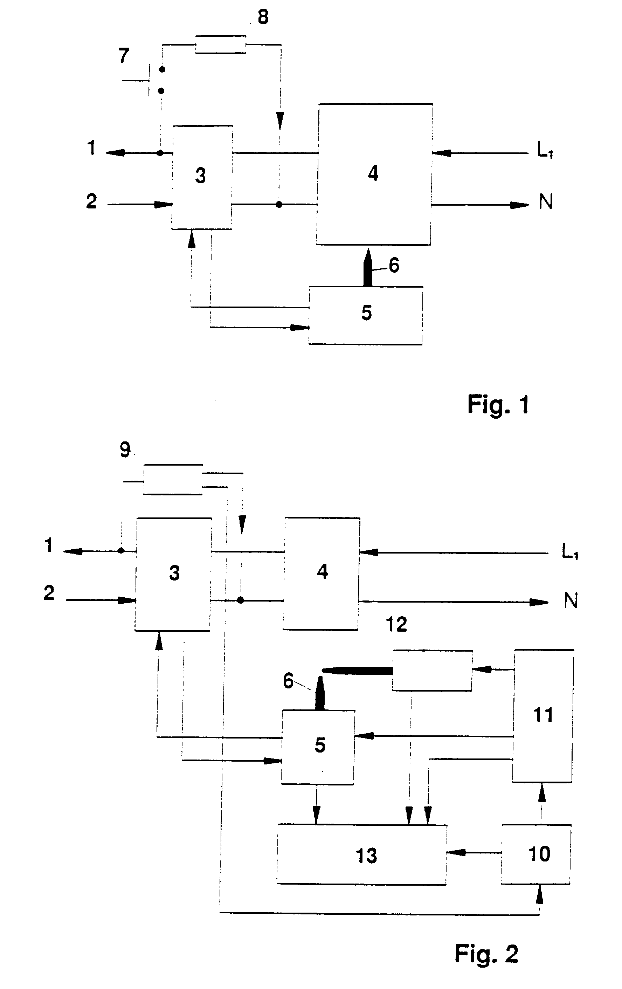

Fig. 1 stellt einen normalen 2-poligen Fehlerstromschutzschalter dar. Die beiden Netzleitungen, Phase 1 und Null 2 durchlaufen den Summenstromwandler 3 und das Schaltwerk 4. Bei Auftreten eines Fehlerstromes erzeugt der Wandler 3 ein Signal, das den Auslöser 5 zum Ansprechen bringt, der wiederum das Schaltwerk 4 mit Hilfe des Stößels 6 aufschlägt und damit den Strom in den Netzleitungen 1 und 2 unterbricht.

Um die Funktionstüchtigkeit des Fehlerstromschutzschalters in regelmäßigen Abständen überprüfen zu können, ist eine Prüfeinrichtung, bestehend aus Prüfta

ste 7 und Prüfwiderstand 8, vorgesehen. Bei Drücken der Prüftaste 7 fließt über den Widerstand 8 ein Fehlerstrom, der den Schalter ausschaltet. Nach dem Prüfvorgang schaltet man den Schalter wieder ein.

Fig. 2 zeigt einen 2-poligen Fehlerstromschutzschalter mit einer automatischen Prüftaste gemäß DP4106652.

Die in Fig. 1 dargestellte Prüfeinrichtung (7 u. 8) wurde durch eine automatische 9 ersetzt, die kurz vor Einsetzen des automatischen Prüfvorganges an die Steuereinheit 10 ein Signal gibt. die über einen Antrieb 11 zwischen Auslöserstößel 6 und Schaltwerk 4 eine Sperre 12 schiebt. Diese verhindert die Strom unterbrechung durch das Schaltwerk 4, aber nicht das Auslösen des Auslösers 5.

Die Überwachungs- und Signalgabeeinheit 13 überwacht automatisch die Funktionstüchtigkeit der einzelnen Baugruppen und gibt außerdem Alarm, wenn der Auslöser 5 nicht auslösen sollte.

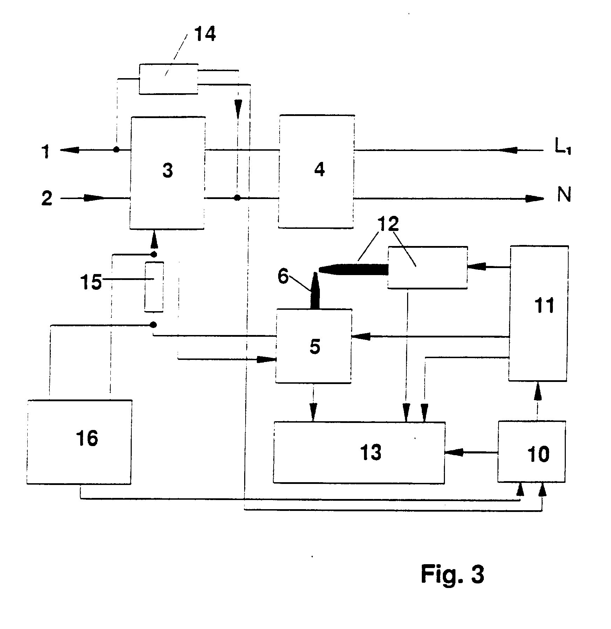

Fig. 3 zeigt ein Ausführungsbeispiel des erfindungsgemäßen Fehlerstromschutzschalters, der sich durch folgende Funktionsgruppen auszeichnet.

Zusätzlich zu den in Fig. 2 gezeigten Elementen 1 - 13 wurde dem Wandler ein Stromgeber 14, ein Meßwiderstand 15 und eine Einheit 16, bestehend aus Komparator, Operationsverstarker, Meßwertspeicher und Differenzierglied (bzw. Differenzenbildner) hinzugefügt.

Der Stromgeber 14 erzeugt automatisch in vorbestimmten Zeiten einen ansteigenden Fehlerstrom, der nach Erreichen des Ansprechwertes den Auslöser 5 zum Auslösen bringt. Genauso wie nach Fig. 2 verhindert dabei die Sperre 12 das Abschalten des Stromes in den Leitungen 1 und 2.

Ein Stromsensor, hier ein Meßwiderstand 15, erfaßt über eine Spannungsmessung den Ansprechwert mit Hilfe einer Sample and Hold-Schaltung. Außerdem vergleicht der Komparator der Einheit 16 die an dem Widerstand 15 abgegriffene Spannung mit dem Sollansprechwert. Alle nach den vorbestimmten Zeitabständen gemessenen Ansprechwerte speichert ein Speicher. Selbstverständlich können alle diese Operationen auch in Digitaltechnik ausgeführt werden.

Ein Differenzbildner ermittelt jeweils aus den momentanen und vorausgegangenen Werten den Anstieg der Stromansprechwerte, um aus diesen auf den Ausfallzeitpunkt des Fehlerstromschutzschalters zu extrapolieren.

Wird ein sich anbahnender Defekt erkannt, gibt die Überwachungseinheit 13 ein Alarmsignal ab und weist in einem hier nicht dargestellten Display auf diesen hin. In einer weiteren Ausgestaltung der Erfindung erscheint auf dem Display der Zeitpunkt (Datum), an dem der Schalter ausgewechselt werden sollte.

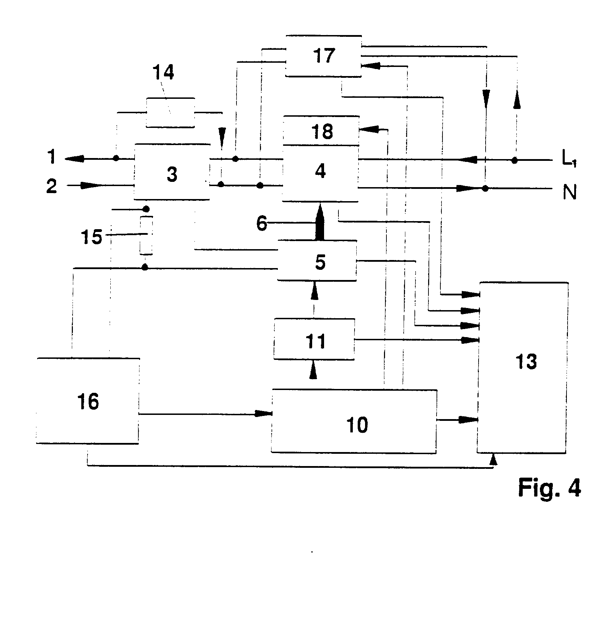

Fig. 4 zeigt ein Ausführungsbeispiel ohne Sperre, dafür mit Bypass 17 und Schaltwerksantrieb 18. In diesem Beispiel wird nicht nur der Ansprechwert des Auslösers 5 ermittelt, gespeichert und ausgewertet, sondern gleichzeitig auch alle anderen Baugruppen, einschließlich des Schaltwerkes 4, seines Antriebes 18 und Bypasses 17 überwacht.

Die Funktionsweise läßt sich ohne weiteres aus der Beschreibung der Fig. 3 ableiten.

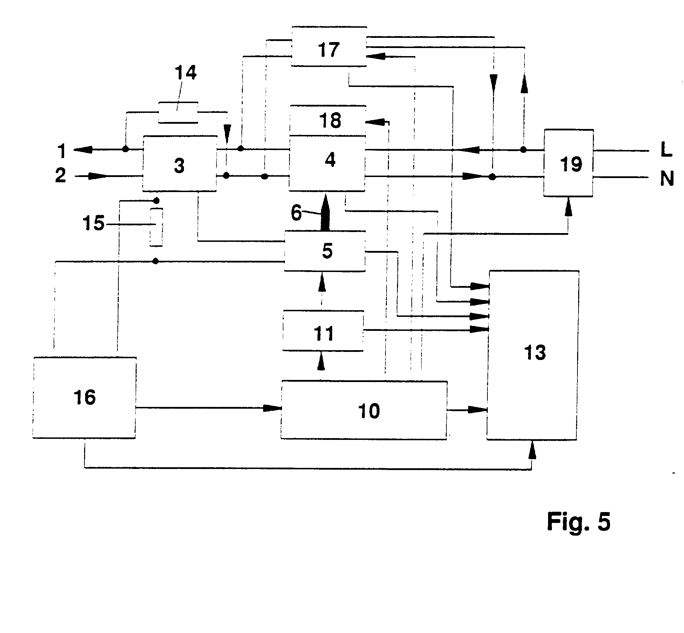

Fig. 5 zeigt ein weiteres Ausführungsbeispiel gemäß Fig. 4, dabei wurde Fig. 4 nur durch ein Schaltgerät 19 ergänzt, das abschaltet, wenn nach einer vorbestimmten, aus dem Anstieg des Ansprechwertes ermittelten Zeit der Schalter nicht ausgetauscht wurde.

Fig. 6 zeigt eine von vielen denkbaren Formen der Sperre 12, die sich in bestimmten Ausführungsbeispielen zwischen den Stößel 6 und das Schaltwerk 4 schiebt und beim Zurückziehen automatisch beispielsweise die Magnetkontakte eines Magnetauslösers 5 schließt.

Fig. 6 besteht aus 4 Figuren 6a - 6d, wobei Fig. 6a die Ausgangsphase des Überwachungsvorganges darstellt. Stößel 6 des Auslösers 5 und die Sperre 12 befinden sich in Bereitschaftsstellungen, d. h. in eingezogenen Zuständen. Man erkennt, daß die löffelartig ausgebildete Sperre 12 an dem Stößel 6 vorbeischießen kann.

Fig. 6b zeigt die Sperre 12 in der Stellung, in der ein Ausschalten des Schaltwerkes 4 nicht mehr möglich ist.

Wenn nun der Ansprechwert gemessen wird und dabei der Auslöser 5 auslöst, schlägt der Stößel 6 an die Sperre 12 an. wie in Fig. 6c gezeigt.

Nach Beendigung des Vorganges zieht sich die Sperre 12 zurück und schiebt, wie in Fig. 6d erkennbar, mit ihrer Verdickung den Stößel 6 nach unten, der seinerseits die Magnetkontakte des Auslösers wieder schließt.

Nach der Schließung der Magnetkontakte befindet sich die Sperre 12 wieder in ihrer Ausgangsposition der Fig. 6a.

11 stellt hier den Antrieb der Sperre 12 dar.

**Patentansprüche**

1. Fehlerstromschutzschalter, mit

   einem Stromgeber (14), der in vorbestimmten Zeitabschnitten einen ansteigenden Fehlerstrom erzeugt,
   einem Stromsensor (15), der die Höhe des Ansprechwertes mißt und mit dem Sollansprechwert vergleicht und
   einer Steuereinheit (16), die durch einen Vergleich des momentanen und der vorangegangenen Ansprechwerte einen sich anbahnenden Defekt rechtzeitig erkennt und einen Alarm abgibt.

2. Fehlerstromschutzschalter nach Anspruch 1, dadurch gekennzeichnet, daß der gesamte Vorgang des Stromgebens, -messens und -vergleichens, sowie auch die Zeitgabe automatisch erfolgt.

3. Fehlerstromschutzschalter nach den Ansprüchen 1 und 2, dadurch gekennzeichnet, daß alle in bestimmten Zeitabständen gemessenen Ansprechwerte $i_a$ gespeichert werden und aus dem automatisch gebildeten zeitlichen Anstieg ($\frac{di_a}{dt}$) derselben auf den Zeitpunkt des Überschreitens des Sollansprechwertes geschlossen, d. h. extrapoliert wird.

4. Fehlerstromschutzschalter nach Ansprüchen 1 bis 3, dadurch gekennzeichnet, daß der Ansprechwert durch einen künstlich erzeugten, d. h. simulierten ansteigenden Fehlerstrom erreicht wird, wobei man beispielsweise den ansteigenden Strom durch einen sog. Rampengenerator o. ä. erzeugt.

5. Fehlerstromschutzschalter nach Ansprüchen 1 bis 4, dadurch gekennzeichnet, daß die Länge der vorbestimmten Zeiten sich nach der Höhe des jeweils gemessenen Ansprechwertes richtet, daß z. B. dann, wenn der Ansprechwert sich dem Sollwert nähert, die o. g. Zeitabstände immer kürzer werden.

6. Fehlerstromschutzschalter nach Ansprüchen 1 bis 5, dadurch gekennzeichnet, daß bei Erreichen eines bestimmten Anstieg-Wertes ($\frac{di_a}{dt}$) Alarm gegeben und/oder die Hauptstromkontakte geöffnet und gleich wieder automatisch geschlossen werden.

7. Fehlerstromschutzschalter nach Anspruch 6, dadurch gekennzeichnet, daß sich vor Öffnen der Hauptstromschaltkontakte des Fehlerstromschutzschalters über diese automatisch bypassartige Hilfs-Stromkontakte schalten, die sich nach dem Gesamtüberprüfungsvorgang, d. h. nach dem Wiederschließen der Hauptstromkontakte öffnen, so daß während des o. g. Vorganges kein Stromausfall auftritt.

8. Fehlerstromschutzschalter nach Ansprüchen 1 bis 5, dadurch gekennzeichnet, daß bei Erreichen des Ansprechwertes ein Auslösemechanismus (5), z. B. ein Auslöserelais, ein Magnetauslöser oder ein anders gearteter Aktor, beispielsweise Piezoaktor, anspricht, aber eine Sperre (12) das Auslösen des Schaltwerkes verhindert, um Stromausfall zu vermeiden.

9. Fehlerstromschutzschalter Ansprüchen 1 bis 5 und 8, dadurch gekennzeichnet, daß die Sperre (12) eine löffelartige Form (Fig. 6) hat, um beim Zurückziehen derselben die Kontakte des Auslösers wieder zu schließen.

10. Fehlerstromschutzschalter nach Ansprüchen 1 bis 5, 7 und 8, dadurch gekennzeichnet, daß die Sperre (12) an geeigneter Stelle im Schaltwerk (4) eingreift und beim Zurückziehen die Kontakte des Auslösers (5) wieder schließt, z. B. die Magnetkontakte eines Magnetauslösers.

11. Fehlerstromschutzschalter nach Ansprüchen 8 bis 10, dadurch gekennzeichnet, daß der Antrieb der Sperre (12) z.B. elektromechanisch, -magnetisch, -thermisch, mit Hilfe von herkömmlichen Aktoren, einem FGL-Antrieb oder ähnlichem erfolgt.

12. Fehlerstromschutzschalter nach Ansprüchen 1 bis 11, dadurch gekennzeichnet, daß der Ansprechwert z. B. täglich gemessen wird und daß der Stromsensor z. B. ein einfacher Meßwiderstand (15) ist, der beispielsweise mit Hilfe einer einfachen Brückenschaltung, eines Komparators und eines Operationsverstärkers den Ansprechwert mißt und ihn mit dem Sollwert vergleicht.

13. Fehlerstromschutzschalter nach den Ansprüchen 1 bis 12, dadurch gekennzeichnet, daß die Zeit, die verstreicht, bis der Fehlerstromschutzschalter wieder funktionsbereit ist, kleiner als 200ms ist.

14. Fehlerstromschutzschalter nach den Ansprüchen 1 bis 13, dadurch gekennzeichnet, daß ein weiterer Sensor, beispielsweise auch eine Rokowsky-Spule, ein durch den Fehlerstromschutzschalter fließenden Kurzschlußstrom detektiert und daß danach sofort eine Messung des Fehlerstrom-Ansprechwertes erfolgt.

15. Fehlerstromschutzschalter nach Anspruch 14, dadurch gekennzeichnet, daß nach der Messung des Fehlerstrom-Ansprechwertes derselbe gleich nochmals gemessen wird, um nach dem Kurzschluß bei Überschreiten des Sollwertes des Fehlerstromes zu signalisieren, den Schalter auszutauschen oder beim Überschreiten des gesetzlich vorgeschriebenen Sollansprechwertes den Schalter auszuschalten und/oder Alarm zu geben.

16. Fehlerstromschutzschalter nach Ansprüchen 1 bis 15, dadurch gekennzeichnet, daß die Meß- und Überwachungseinrichtung (13-16) die Form eines herkömmlichen, an dem Fehlerstromschutzschalter anflanschbaren Hilfsschalters besitzt.

17. Fehlerstromschutzschalter nach Ansprüchen 1 bis 16, dadurch gekennzeichnet, daß alle Funktionen des erfindungsgemäßen Fehlerstromschutzschalters mittels herkömmlicher Mittel, beispielsweise durch Hilfskontakte, überwacht werden und bei Versagen, d. h. Ausfall einer oder mehrerer Funktionen Alarm gegeben wird.

18. Fehlerstromschutzschalter nach den Ansprüchen 1 bis 17, dadurch gekennzeichnet, daß die Einheit zur Überwachung, Steuerung und Signalgabe (13-16) in eine gebäudesystemtechnische Anlage integriert werden.

19. Fehlerstromschutzschalter nach den Ansprüchen 1 bis 18, dadurch gekennzeichnet, daß der künstlich erzeugte, langsam ansteigende Fehlerstrom mit Hilfe eines A/D-Wandlers digitalisiert und in Digitaltechnik weiterverarbeitet und ausgewertet wird.

## Claims

1. Fault current circuitbreaker comprising a current sender (14) which produces a rising fault current at predetermined time sections, a current sensor (15), which measures the height of the response value and compares it with the target response value and a control unit (16) which through a comparison of the instantaneous and the preceding response value recognises a looming defect in good time and gives an alarm.

2. Fault current circuitbreaker according to claim 1, characterised in that the entire process of current transmitting, current measuring and current comparing as well as the timing takes place automatically.

3. Fault current circuitbreaker according to claims 1 and 2, characterised in that all response values $i_a$ measured at specific time intervals are stored and the instant of exceeding the target response value is concluded, i.e. extrapolated, from the automatically formed increase over time ($di_1/dt$) of the re-sponse values.

4. Fault current circuitbreaker according to claims 1 to 3, characterised in that the response value is attained by an artificially produced, i.e. simulated, rising fault current, wherein the rising current is produced by, for example, a so-called ramp generator.

5. Fault current circuitbreaker according to claims 1 to 4, characterised in that the length of the predetermined times is oriented to the height of the respectively measured response value, and that when, for example, the response value approaches the target value the aforesaid time intervals become ever shorter.

6. Fault current circuitbreaker according to claims 1 to 5, characterised in that on attainment of a specific increase value ($di_1/dt$) an alarm is given and/or the main current contacts are opened and equally automatically closed again.

7. Fault current circuitbreaker according to claim 6, characterised in that before opening of the main current switching contacts of the fault current circuitbreaker, automatic bypass-like auxiliary current contacts switch across these and open after the entire checking process, i.e. after the reclosing of the main current contacts, so that no cutting out of current occurs during the aforesaid process.

8. Fault current circuitbreaker according to claims 1 to 5, characterised in that on attainment of the response value a trigger mechanism (5), for example a trigger relay, a magnetic trigger or another kind of actuator, for example a piezoactuator, responds, but a barrier (12) prevents the triggering of the switching mechanism so as to avoid cutting out of current.

9. Fault current circuitbreaker according to claims 1 to 5 and 8, characterised in that the barrier (12) has a spoon-shaped form similar to that illustrated in (Fig. 6) so as to reclose, on withdrawal of the same, the contacts of the trigger.

10. Fault current circuitbreaker according to claims 1 to 5, 7 and 8, characterised in that the barrier (12) engages at a suitable place in the switching mechanism (4) and, on withdrawal, recloses the contacts of the trigger (5), for example the magnet contacts of a magnetic trigger.

11. Fault current circuitbreaker according to claims 8 to 10, characterised in that the drive of the barrier (12) is effected, for example, electromechanically, electromagnetically, electrothermally, with the aid of conventional actuators, an FGL drive or similar.

12. Fault current circuitbreaker according to claims 1 to 11, characterised in that the response value is measured, for example, daily and that the current sensor is, for example, a simple measuring resistor (15), which, for example, with the aid of a simple bridge circuit, a comparator and an operational amplifier measures the response value and compares it with the target value.

13. Fault current circuitbreaker according to claims 1 to 12, characterised in that the time which extends until the fault current circuitbreaker is functionally ready again is smaller than 200 ms.

14. Fault current circuitbreaker according to claims 1 to 13, characterised in that a further sensor, for example even a Rokowsky coil, detects a short-circuit current flowing through the fault current circuitbreaker and that a measuring of the fault current response value takes place immediately thereafter.

15. Fault current circuitbreaker according to claim 14, characterised in that after the measuring of the fault current response value this is measured once again, in order, after the short circuit, on exceeding of the target value of the fault current to signal that the switch should be exchanged or on exceeding of legally prescribed target response value to switch off the switch and/or give an alarm.

16. Fault current circuitbreaker according to claims 1 to 15, characterised in that the measuring and monitoring device (13 to 16) has the form of a conventional auxiliary switch able to be flange-mounted to the fault current circuitbreaker.

17. Fault current circuitbreaker according to claims 1 to 16, characterised in that all functions of the fault current circuitbreaker according to the invention are monitored by means of conventional means, for example by auxiliary contacts, and on breakdown, i.e. failure, of one or more functions an alarm is given.

18. Fault current circuitbreaker according to claims 1 to 17, characterised in that the units for monitoring, controlling and signal delivery (13 to 16) are integrated into an installation in the manner of modular system technology.

19. Fault current circuitbreaker according to claims 1 to 18, characterised in that the artificially produced, slowly rising fault current is digitalised with the aid of an analog-to-digital converter and further processed and evaluated in digital technique.

## Revendications

1. Coupe-circuit par courant de défaut équipé

   d'un générateur de courant (14), qui génère, à des intervalles de temps prescrits, un courant de défaut croissant,
   d'un détecteur de courant (15), qui mesure l'amplitude de la valeur de réponse et la compare à la valeur de réponse de consigne et
   d'une unité de commande (16), qui reconnaît en temps voulu, grâce à une comparaison des valeurs de réponse instantanée et antérieure, un défaut imminent et déclenche une alarme.

2. Coupe-circuit par courant de défaut selon la revendication 1, caractérisé en ce que la totalité du processus de génération, de mesure et de comparaison de courant, ainsi que le minutage, s'effectue automatiquement.

3. Coupe-circuit par courant de défaut selon les revendications 1 et 2, caractérisé en ce que toutes les valeurs de réponse $i_a$ mesurées à des intervalles de temps déterminés sont mémorisées et à partir de l'accroissement par rapport au temps formé automatiquement

$$\left(\frac{di_a}{dt}\right)$$

de celles-ci, on détermine, c'est-à-dire on extrapole l'instant du franchissement de la valeur de réponse de consigne.

4. Coupe-circuit par courant de défaut selon l'une quelconque des revendications 1 à 3, caractérisé en ce que la valeur de réponse est obtenue par un courant de défaut croissant généré artificiellement, c'est-à-dire simulé, le courant croissant étant par exemple généré par un générateur de rampe ou autre.

5. Coupe-circuit par courant de défaut selon l'une quelconque des revendications 1 à 4, caractérisé en ce que la longueur des temps prédéterminés s'aligne sur l'amplitude de la valeur de réponse mesurée respective, en ce que, par exemple, lorsque la valeur de réponse s'approche de la valeur de consigne, les intervalles de temps précités deviennent de plus en plus brefs.

6. Coupe-circuit par courant de défaut selon l'une quelconque des revendications 1 à 5, caractérisé en ce que lors de l'obtention d'une valeur de croissance déterminée

$$\left(\frac{di_a}{dt}\right)$$

une alarme est déclenchée et/ou les contacts de courant principal sont ouverts et également à nouveau fermés automatiquement.

7. Coupe-circuit par courant de défaut selon la revendication 6, caractérisé en ce qu'avant l'ouverture des contacts de courant principal du coupe-circuit par courant de défaut sont commutés automatiquement, par l'intermédiaire de ceux-ci, des contacts de courant auxiliaire de dérivation, qui s'ouvrent après le processus de vérification global, c'est-à-dire après la fermeture à nouveau des contacts de courant principal, de sorte que, durant le processus précité, aucune panne de courant n'apparaît.

8. Coupe-circuit par courant de défaut selon l'une quelconque des revendications 1 à 5, caractérisé en ce que, lors de l'obtention de la valeur de réponse, un mécanisme de déclenchement (5), par exemple un relais de déclenchement, un déclencheur magnétique ou un organe d'actionnement d'un autre type, par exemple un organe d'actionnement piézo-électrique, répond, mais un dispositif de blocage (12) empêche le déclenchement du mécanisme de commutation, afin d'éviter une panne de courant.

9. Coupe-circuit par courant de défaut selon l'une quelconque des revendications 1 à 5 et 8, caractérisé en ce que l'organe de blocage (12) présente une forme de cuillère analogue à celle représentée sur la Figure 6, afin de fermer à nouveau les contacts du déclencheur, lors de son retrait.

10. Coupe-circuit par courant de défaut selon l'une quelconque des revendications 1 à 5, 7 et 8, caractérisé en ce que le dispositif de blocage (12) engrène en un endroit approprié avec le mécanisme (4) et ferme à nouveau les contacts du déclencheur (5) lors du retrait, par exemple les contacts magnétiques d'un déclencheur magnétique.

11. Coupe-circuit par courant de défaut selon l'une quelconque des revendications 8 à 10, caractérisé en ce que l'entraînement du dispositif de blocage (12) s'effectue électromécaniquement, électromagnétiquement, électro-thermiquement, à l'aide de dispositifs d'actionnement classiques, d'un entraînement FGL ou analogue.

12. Coupe-circuit par courant de défaut selon l'une quelconque des revendications 1 à 11, caractérisé en ce que la valeur de réponse est mesurée, par exemple, quotidiennement et en ce que le capteur de courant est par exemple une simple résistance de mesure (15), qui mesure, par exemple à l'aide d'un simple circuit en pont, d'un comparateur ou d'un amplificateur opérationnel, la valeur de réponse et la compare à la valeur de consigne.

13. Coupe-circuit par courant de défaut selon l'une quelconque des revendications 1 à 12, caractérisé en ce que le temps qui s'écoule jusqu'à ce que le coupe-circuit par courant de défaut soit à nouveau prêt à fonctionner, est inférieur à 200 ms.

14. Coupe-circuit par courant de défaut selon l'une quelconque des revendications 1 à 13, caractérisé en ce qu'un autre capteur, par exemple une bobine de Rokowsky, détecte un courant de court-circuit circulant à travers le coupe-circuit par courant de défaut et en ce qu'ensuite est effectuée aussitôt une mesure de la valeur de réponse au courant de défaut.

15. Coupe-circuit par courant de défaut selon la revendication 14, caractérisé en ce qu'après la mesure de la valeur de réponse au courant de défaut, celle-ci est aussitôt à nouveau mesurée, afin de signaler le remplacement du commutateur après le court-circuit lors d'un franchissement de la valeur de consigne du courant de défaut ou de couper le coupe-circuit lors du franchissement de la valeur de réponse de consigne légalement prescrite et/ou de délivrer une alarme.

16. Coupe-circuit par courant de défaut selon l'une quelconque des revendications 1 à 15, caractérisé en ce que le dispositif de mesure et le dispositif de surveillance (13-16) possède la forme d'un interrupteur auxiliaire classique pouvant être accouplé au coupe-circuit par courant de défaut.

17. Coupe-circuit par courant de défaut selon l'une quelconque des revendications 1 à 16, caractérisé en ce que toutes les fonctions du coupe-circuit par courant de défaut selon l'invention sont surveillées à l'aide de moyens classiques, par exemple de contacts auxiliaires, et en cas de panne, c'est-à-dire d'une défaillance d'une ou de plusieurs fonctions, une alarme est délivrée.

18. Coupe-circuit de courant de défaut selon l'une quelconque des revendications 1 à 17, caractérisé en ce que l'unité de surveillance, de commande et de délivrance de signaux (13-16) est intégrée dans une installation technique d'un bâtiment.

19. Coupe-circuit par courant de défaut selon l'une quelconque des revendications 1 à 18, caractérisé en ce que le courant de défaut croissant lentement, généré artificiellement, est numérisé à l'aide d'un convertisseur analogique/numérique et traité et évalué numériquement.

**Fig. 1**

**Fig. 2**

**Fig. 3**

**Fig. 4**

**Fig. 5**

**Fig. 6a**

**Fig. 6b**

**Fig. 6c**

**Fig. 6d**